# EUROPÄISCHE PATENTSCHRIFT

(11) **EP 1 050 690 B1**
(45) Veröffentlichungstag und Bekanntmachung des Hinweises auf die Patenterteilung: **29.09.2004**
(21) Anmeldenummer: 00810365.7
(22) Anmeldetag: 01.05.2000
(51) Int. Cl.: F16B 13/04

(54) **Befestigungsvorrichtung für plattenförmige Isolationselemente**
Fastening device for insulating panels
Dispositif de fixation pour panneaux isolants

(30) Priorität: 07.05.1999 DE 19921151
(43) Veröffentlichungstag der Anmeldung: 08.11.2000
(73) Patentinhaber: HILTI Aktiengesellschaft, 9494 Schaan (LI)
(72) Erfinder: Mischer, Stefan, 9492 Eschen (LI)
(74) Vertreter: Wildi, Roland

(56) Entgegenhaltungen:
- EP-A- 0 807 722
- DE-A- 3 045 986

## Beschreibung

Die Erfindung betrifft eine Befestigungsvorrichtung für plattenförmige Isolationselemente gemäss dem Oberbegriff des Patentanspruchs 1.

Zur Wärmeisolation und vielfach auch zur Schallisolation von Wänden und Decken werden plattenförmige Isolationsmaterialien, beispielsweise Dämmstoffplatten, eingesetzt. Die Isolationsmaterialien werden dabei üblicherweise an der noch unverputzten Mauer befestigt. Zur Befestigung der plattenförmigen Isolationsmaterialien kommen Befestigungsvorrichtungen zum Einsatz, die einen grossflächigen, flachen Anpressteller und einen davon abragenden Hohlschaft aufweisen, der in das Isolationsmaterial gesteckt wird. Die Verankerung in der Mauer erfolgt meist über dübelartige oder nagelähnliche Verankerungsteile, die sich in Verlängerung des vom Anpresstellers abragenden Hohlschafts erstrecken. Dübelartige Verankerungsteile werden in vorgebohrte Bohrlöcher in der Mauer eingesteckt und durch Verspreizen verankert. Die dübelartigen Verankerungsteile können dabei beispielsweise integral am Hohlschaft angeformt sein. Meist handelt es sich dabei jedoch um eine Dübelhülse, die durch den Hohlschaft gesteckt ist und von diesem in axialer Verlängerung abragt. Nagelartige Verankerungsteile werden ohne die Erstellung einer Bohrung unmittelbar in den Untergrund eingetrieben. Ein Hohlraum, der sich durch den Hohlschaft erstreckt und in einer Öffnung am Anpressteller mündet, gewährleistet den Zugang eines Werkzeuges zu einer Spreizschraube oder dergleichen Spreizkörper für das dübelartige Verankerungsteil bzw. zu einem nagelartigen Verankerungsteil. Nachdem die Mauer mit dem plattenförmigen Isolationsmaterial verkleidet ist, wird der Verputz aufgebracht. Dabei ist es wichtig, dass kein Putzmaterial in den Innenraum des Hohlschafts gelangt, da dies zu Vertiefungen an der Oberfläche der aufgetragenen Putzschicht führen kann. Dringt Putzmaterial und damit auch Feuchtigkeit in den Innenraum des Hohlschaftes ein, kann dies bei den verwendeten Verankerungsteilen zu Korrosionsproblemen führen. Zudem besteht die Gefahr der Bildung von Wärmebrücken, wodurch die Wirksamkeit der Isolierung beeinträchtigt ist.

Aus dem Stand der Technik sind daher Lösungsvorschläge für Verschlüsse für die Öffnung im Anpressteller bekannt, die verhindern sollen, dass Putz und Feuchtigkeit in das Innere des Hohlschafts eindringen. In der US-A-5,118,235 ist beispielsweise vorgeschlagen, die Öffnung mittels eines Deckels zu verschliessen, der um eine im Bereich der Öffnung angeordnete Achse an der Flachseite des Anpresstellers angelenkt ist. In geschlossener Stellung wirkt der Schwenkdeckel mit einem Vorsprung zusammen, der von einer Innenwand des Hohlschaftes abragt. Bei diesem Deckel besteht die Gefahr, dass er beim Verschliessen oder beim Auftragen des Verputzes derart weit in den Innenraum des Hohlschaftes eingedrückt wird, dass die Öffnung nicht mehr richtig verschlossen ist. Wird er andererseits nicht ausreichend fest in die Öffnung hineingedrückt, kann der Deckel hochstehen. Auch dadurch ist die Öffnung nicht richtig verschlossen. Beim Verputzen kann der hochstehende Deckel noch weiter geöffnet werden. Dann kann wiederum Putzmaterial und Feuchtigkeit in den Innenraum des Hohlschaftes gelangen. Darüber hinaus stellt der hochstehende Deckel beim Auftragen des Verputzes ein Hindernis dar, was zu unbefriedigenden Ergebissen führen kann. Im geöffneten Zustand nimmt der Schwenkdeckel eine zufällige Lage ein. Vielfach kann er die Öffnung im Anpressteller teilweise abdecken. Dies behindert das Einführen eines Verankerungsteils und zwingt den Anwender meist dazu, mit der einen Hand den Deckel wegzuhalten während mit der anderen Hand das Verankerungsteil in den Hohlschaft eingebracht wird.

Aus der EP 0 807 722 A2 ist eine Befestigungsvorrichtung zum Befestigen von Isolationselementen an einem Bauteil bekannt. Diese weist einen grossflächigen Kopf und einen vom Kopf abragenden Hohlschaft für ein, in ein Bauteil eintreibbares Befestigungselement auf. Der durch eine Öffnung im Kopf frei zugängliche Innenraum des Hohlschaftes ist von wenigstens einem am Kopf angeordneten, um eine ausserhalb der Öffnung liegende Gelenkachse schwenkbaren Deckel verschliessbar.

Aufgabe der vorliegenden Erfindung ist es, diesen Nachteilen des Stands der Technik abzuhelfen. Es soll eine Befestigungsvorrichtung für plattenförmige Isolationselemente geschaffen werden, die einen zuverlässig schliessenden Verschluss für die Öffnung im Anpressteller aufweist. Im geöffneten Zustand soll der Verschluss den Zugang in das Innere des Hohlschafts nicht behindern. Dabei soll die Befestigungsvorrichtung einfach und kostengünstig herstellbar sein.

Die Lösung dieser Aufgaben besteht in einer Befestigungsvorrichtung für plattenförmige Isolationselemente, welche die im kennzeichnenden Abschnitt des Patentanspruchs 1 angeführten Merkmale aufweist. Bevorzugte Ausführungsbeispiele und/oder Weiterbildungen der Erfindung sind jeweils Gegenstand der abhängigen Patentansprüche. Die erfindungsgemässe Befestigungsvorrichtung für plattenförmige Isolationselemente besitzt einen flachen Anpressteller mit einem davon abragenden Hohlschaft. Der Hohlschaft umschliesst einen Hohlraum, der in einer Öffnung im Anpressteller mündet, die durch wenigstens einen, über ein Biegegelenk am Anpressteller angelenkten, plattenartigen Verschlussdeckel verschliessbar ist. In axialer Verlängerung des Hohlschafts erstrecken sich Verankerungsteile zur Verankerung der Befestigungsvorrichtung im Untergrund. Der plattenartige Verschlussdeckel weist das im wesentlichen linienförmiges Biegegelenk auf, das in unmittelbarer Nachbarschaft zu der Öffnung am Anpressteller angeordnet ist. Das Biegegelenk ist räumlich derart gekrümmt, dass es eine Ebene aufspannt, die gegenüber einer vom flachen Anpressteller definierten Ebene und einer parallel zur Achse des Hohlschaftes verlaufenden Ebene geneigt verläuft

Durch die erfindungsgemässe Ausbildung des Verschlussdeckels ist die Öffnung im Anpressteller der Befestigungsvorrichtung zuverlässig verschliessbar. Durch das räumlich gekrümmt verlaufende, linienförmige Biegegelenk existieren für den Verschlussdeckel zwei definierte Endlagen, in denen er frei von Zug- und Druckspannungen ist. Erst bei einem Übergang vom geöffneten in den zugeklappten Zustand treten innerhalb des Verschlussdeckels Zug- und/oder Druckspannungen auf. Diese Spannungen erreichen ihren grössten Wert genau dann, wenn der Verschlussdeckel sich in einer Zwischenposition befindet, die der Ebene entspricht, welche von dem gekrümmten Biegegelenk aufgespannt wird. Diese Zwischenposition ist instabil, und der Verschlussdeckel versucht daher immer selbsttätig, die energetisch günstigeren Endlagen - entweder geöffnet oder geschlossen - zu erreichen. Für den Anwender ergibt sich daraus der Vorteil, dass er bei der Montage der Befestigungsvorrichtung durch keinen in einer undefinierten Lage befindlichen Verschlussdeckel mehr behindert ist. Im zugeklappten Endzustand verharrt der Verschlussdeckel in dieser energetisch günstigeren Lage und gewährleistet einen sicheren Verschluss der Öffnung gegen ein unbeabsichtigtes Eindringen von Putzmaterial oder Feuchtigkeit. Hinsichtlich der Herstellung der erfindungsgemäss ausgebildeten Befestigungsvorrichtung bestehen keine grösseren Anforderungen als bei der Herstellung der bislang aus dem Stand der Technik bekannten Lösungen. Daher ist die Befestigungsvorrichtung in gewohnter Weise in kostengünstigen Massenfertigungsverfahren, beispielsweise in einem Kunststoffspritzgiessverfahren, fertigbar.

Durch die Wahl des Neigungswinkels der vom gekrümmten Biegegelenk aufgespannten Ebene gegenüber der Ebene des Anpresstellers ist der Widerstand gegen eine Veränderung der relativen Lage des Verschlussdeckels aus der geöffneten oder der geschlossenen Endlage beeinflussbar. Auch die relative Position des Verschlussdeckels in der geöffneten Endlage ist dadurch festlegbar. Als zweckmässig erweisen sich dabei Neigungswinkel in Richtung der achsparallelen Ebene von etwa 30° bis etwa 75°. Bevorzugt ist ein Neigungswinkel von etwa 45°, da sich dabei weitgehend symmetrische Kraftverhältnisse ergeben, und der Verschlussdeckel in der geöffneten Endlage etwa senkrecht von der Oberfläche des Anpresstellers abragt.

In einer Variante der Erfindung weist der Anpressteller einen die Öffnung umrandenden, vertieften Bereich auf, der zur Aufnahme des plattenförmigen Verschlussdeckels ausgebildet ist. Auf diese Weise ist der Verschlussdeckel in der geschlossenen Endlage in einer Vertiefung angeordnet und überragt die Oberfläche des Anpresstellers nicht oder nur unwesentlich. Indem der vertiefte Bereich wenigstens an der dem Gelenkbereich gegenüberliegende Seite der Öffnung eine Anschlagschulter bildet, kann sich der Verschlussdeckel in seiner geschlossenen Endlage abstützen. Durch die Anschlagschulter ist auch die Gefahr beseitigt, den Verschlussdeckel beim Verschliessen durch die Öffnung in das Innere des Hohlraums zu pressen. In einer vorteilhaften Variante ist die Öffnung im Anpressteller entlang ihres gesamten Umfangs von einer im wesentlichen durchgehenden Anschlagschulter berandet.

Durch die gekrümmte Gelenklinie des Biegegelenks ergeben sich für am Rand und weiter im Inneren liegende Bereiche des Verschlussdeckels unterschiedliche Zug- und Druckspannungen. Dadurch wölbt sich der Verschlussdeckel in seinen beiden Endlagen jeweils entgegengesetzt, um die beim Öffnen oder Schliessen entstehenden Zug- und Druckspannungen abzubauen. Die Krümmung des Biegegelenk ist dabei derart, dass der Verschlussdeckel in der geschlossenen Endlage in Richtung der Öffnung konkav gewölbt ist. In der geöffneten Endlage ist der Verschlussdeckel von der Öffnung weg konvex gewölbt. Zur Erleichterung der Wölbung ist der Verschlussdeckel mit Sollbiegestellen versehen, die sich vom gekrümmten Gelenkbereich zum gegenüberliegenden freien Ende des Verschlussdeckels erstrecken.

In einer fertigungstechnisch vorteilhaften Ausführungsvariante ist das gekrümmte Biegegelenk als ein Folienscharnier ausgebildet.

Für die Dimensionierung des gekrümmten Biegegelenks erweist es sich von Vorteil, wenn als Verschluss für die Öffnung zwei plattenförmige Verschlussdeckel vorgesehen sind. Die beiden Verschlussdeckel sind an einander gegenüberliegenden Bereichen beidseits der Öffnung am Anpressteller angelenkt. Sie erstrecken sich jeweils von einem gekrümmten, linienförmigen Biegegelenk in Richtung des gegenüberliegenden Verschlussdeckels. Bei zwei Verschlussdeckeln kann die vom gekrümmten Biegegelenk aus gemessene Längserstreckung der Deckel verringert werden, da ja nicht ein einzelner Verschlussdeckel die gesamte Öffnung verschliessen muss. Bei einem weniger langen Verschlussdeckel kann die Krümmung des Biegegelenks verringert werden, ohne die für die Veränderung der Endlage erforderliche Kraft zu verringern.

Die Länge der beiden Verschlussdeckel kann derart bemessen sein, dass diese in der geschlossenen Endlage teilweise überlappen. Mit Vorteil decken die Verschlussdeckel im zugeklappten Zustand die Öffnung jeweils nur etwa zur Hälfte ab. Dadurch ist es für den Anwender unerheblich, welchen der beiden Verschlussdeckel er zuerst über die Öffnung klappt, und die Verschlussdeckel ragen in der geschlossenen Endlage nicht oder nur geringfügig über die Oberfläche des Anpresstellers hinaus.

Im folgenden wird die Erfindung unter Bezugnahme auf ein in den Figuren dargestelltes Ausführungsbeispiel näher erläutert. Es zeigen:
- Fig. 1: eine perspektivische Ansicht einer erfindungsgemässen Befestigungsvorrichtung;
- Fig. 2: eine Draufsicht der Befestigungsvorrichtung gemäss Fig. 1;
- Fig. 3: eine Ansicht gemäss Schnittlinie III-III in Fig. 2; und
- Fig. 4 und 5: zwei schematische Darstellungen zur Erläuterung der geometrischen Verhältnisse.

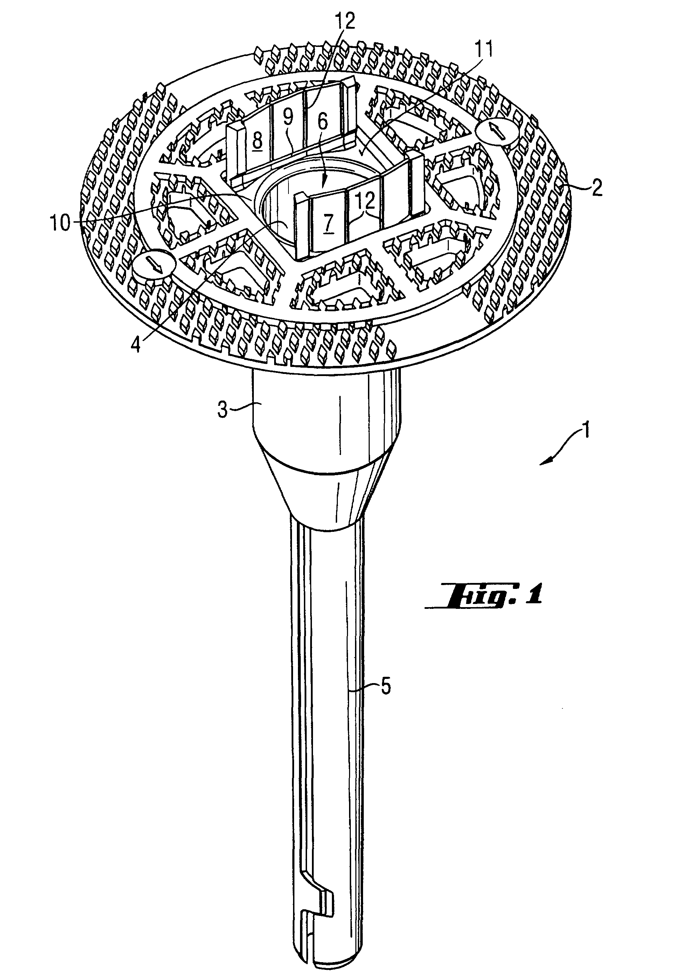

Das in Fig. 1 dargestellte Ausführungsbeispiel einer Befestigungsvorrichtung für plattenförmige Isolationsmaterialien ist gesamthaft mit dem Bezugszeichen 1 versehen. Die Befestigungsvorrichtung 1 umfasst eine grossflächige, flache Anpressplatte 2, von der ein Hohlschaft 3 axial abragt. Der Hohlschaft 3 umschliesst einen Hohlraum 4, der in einer zentralen Öffnung 6 im Anpressteller mündet. In axialer Verlängerung des Hohlschaftes 3 erstreckt sich ein Verankerungsteil 5, beispielsweise ein dübel- oder nagelartiges Element, das zur Verankerung der Befestigungsvorrichtung 1 im Untergrund, beispielsweise Beton oder Mauerwerk, dient. Das Verankerungsteil 5 kann integral an den Hohlschaft 3 angeformt sein. Meist ist das Verankerungsteil 5 ein durch die Öffnung 6 durchgestecktes dübel- oder nagelartiges Element, das sich an dem der Öffnung 6 gegenüberliegenden Ende des Hohlschaftes 3 abstützt und durch eine dort vorgesehene Bohrung ragt. Das Verankerungsteil 5 ist durch die Öffnung 6 für ein Setzwerkzeug zugängig.

Zum Verschliessen der Öffnung 6 sind an einander gegenüberliegenden Seiten der Öffnung 6 am Anpressteller 2 zwei klappenartige Verschlussdeckel 7, 8 angelenkt. Im Bereich der Öffnung 6 ist im Anpressteller eine rechteckig bzw. quadratisch ausgebildete Vertiefung 10 vorgesehen, welche die in ihre Schliessstellung umgeklappten Verschlussdeckel 7, 8 aufnimmt. Der Boden der Vertiefung 10 bildet um den Rand der Öffnung 6 herum eine im wesentlichen umlaufende Anschlagschulter 11 für die Verschlussdeckel 7, 8. Die Verschlussdeckel 7, 8 erstrecken sich jeweils von einem Biegegelenk 9 zum gegenüberliegenden Verschlussdeckel. Die Länge der Verschlussdeckel 7, 8 ist derart bemessen, dass sie in der Schliesslage mit ihren einander gegenüberliegenden freien Randbereichen aneinandergrenzen und jeweils die Öffnung 6 etwa zur Hälfte abdecken. Aus der Darstellung in Fig. 1 sind auch noch Sollbiegestellen 12 ersichtlich, die sich vom Biegegelenk 9 zur freien Kante eines Verschlussdeckels 7, 8 erstrecken. Die Funktion der Sollbiegestellen 12 wird nachstehend noch näher erläutert.

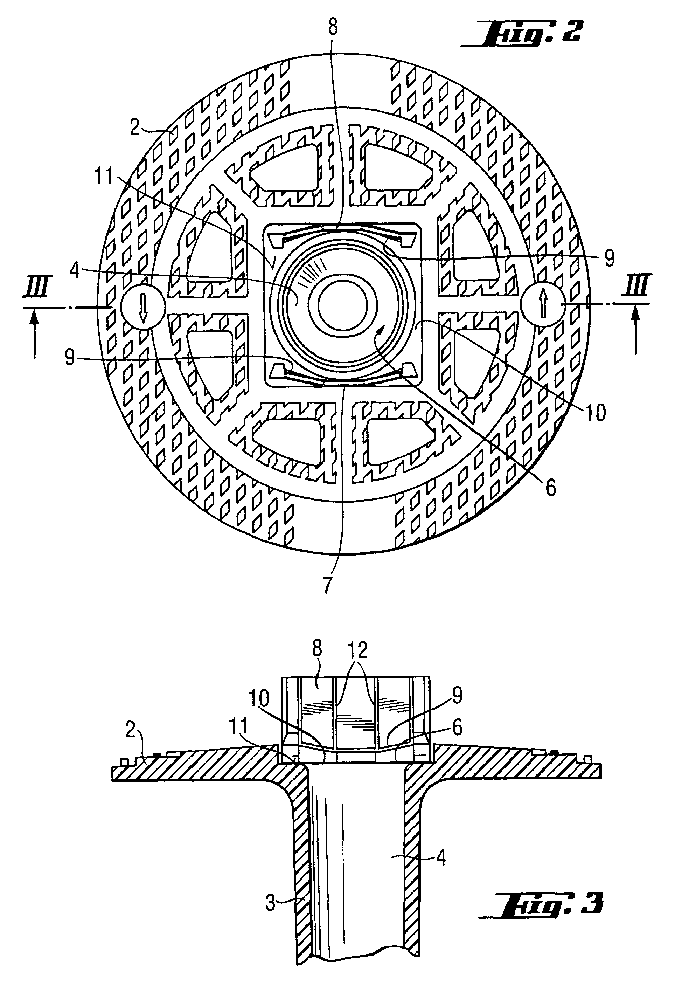

Die Bezugszeichen in der Draufsicht der Fig. 2 und der Schnittdarstellung gemäss Fig. 3 entsprechen jeweils den Bezeichnungen in Fig. 1. Aus Fig. 2 und Fig. 3 ist ersichtlich, dass das Biegegelenk 9 im wesentlichen linienförmig ausgebildet ist und einen räumlich gekrümmten Verlauf aufweist. Das gekrümmte Biegegelenk 9 erstreckt sich dabei in unmittelbarer Nachbarschaft der Öffnung 6 innerhalb der Vertiefung 10. In axialer Richtung erstreckt es sich im wesentlichen von der Oberfläche des Anpresstellers 2 bis zum als Anschlagschulter 11 dienenden Boden der Vertiefung 10 (Fig. 3).

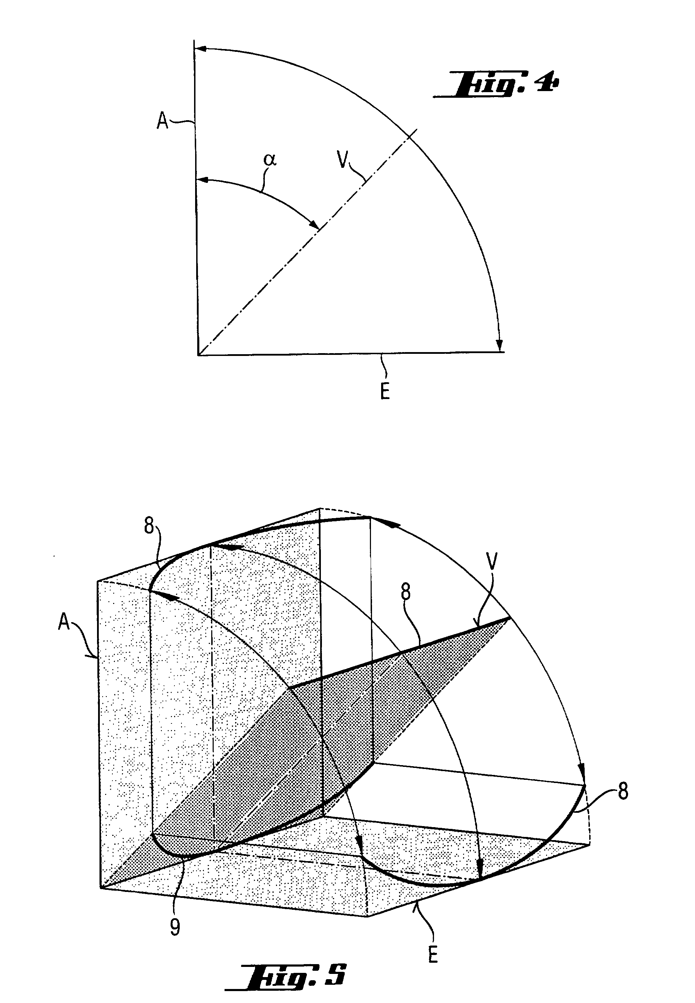

Die geometrischen Verhältnisse der Verschlussdeckel sollen am Beispiel des Verschlussdeckels 8 erläutert werden, der in Fig. 4 und 5 schematisch dargestellt ist. In den Darstellungen ist eine im wesentlichen parallel zur Achse des Hohlschafts verlaufende Ebene mit dem Bezugszeichen A versehen. Eine durch die Oberfläche des Anpresstellers verlaufende Ebene trägt das Bezugszeichen V. Die achsparallele Ebene A symbolisiert die Endlage des geöffneten Verschussdeckels 8, während die Ebene E den Verschlussdeckel 8 in seiner geschlossenen Endlage symbolisiert. Durch seine räumlich gekrümmte Gelenklinie wird durch das Biegegelenk 9 eine Ebene V aufgespannt, die gegenüber der achsparallelen Ebene A und der vom Anpressteller definierten Ebene E geneigt verläuft. Der Neigungswinkel, den die vom gekrümmten Biegegelenk 9 aufgespannte Ebene V mit der achsparallelen Ebene A einschliesst, trägt in Fig. 4 das Bezugszeichen α. Dabei liegt der Neigungswinkel α der Ebene V Bereich von etwa 30° bis etwa 75°. Bevorzugt ist ein Neigungswinkel α von etwa 45°, bei dem sich für den Verschlussdeckel 8 hinsichtlich der auftretenden Druck- und Zugspannungen weitgehend symmetrische Verhältnisse ergeben.

Die beim Öffnen und Schliessen auftretenden Zug- und Druckspannungen auf den Verschlussdeckel 8 sind unterschiedlich, je nachdem, ob ein Randabschnitt oder ein weiter innen liegender Bereich des Verschlussdeckels 8 betrachtet wird. Dadurch ist der Verschlussdeckel 8 in der geöffneten und in der geschlossenen Endposition, symbolisiert durch die Ebenen A bzw. E, entgegengesetzt gewölbt. Die räumliche Krümmung des Biegegelenks 9 ist dabei derart gewählt, dass der Verschlussdeckel 8 in seiner geöffneten Endlage konvex, von der Öffnung weg gewölbt und in der geschlossenen Endlage konkav, auf die Öffnung zu gewölbt ist. Wegen der Wölbung stimmt der geometrische Verlauf des Verschlussdeckels 8 in seinen Endlagen nicht mehr vollständig mit den in Fig. 4 spezifizierten Ebenen A, E überein und es liegen jeweils nur die Scheitelbereiche des gewölbten Verschlussdeckels 8 in den zur Erläuterung eingeführten Ebenen A, E, wie es auch in Fig. 5 angedeutet ist.

Damit die Verschlussdeckel 7, 8 beim Verschliessen bzw. beim Öffnen leichter ihre Wölbung umkehren können, sind sie mit Sollbiegestellen versehen, die sich vom gekrümmten Biegegelenk 9 zum freien Rand jedes Verschlussdeckels 7, 8 erstrecken und in Fig. 1 mit dem Bezugszeichen 12 versehen sind. Der Übergang von der konvexen zur konkaven Wölbung eines Verschlussdeckels 7, 8 erfolgt beim Schliessen des Verschlussdeckels in einer Zwischenlage, in welcher der Verschlussdeckel 7, 8 den höchsten Zug- und Druckspannungen ausgesetzt ist. Diese Zwischenlage des Verschlussdeckels 7, 8 entspricht gerade der vom räumlich gekrümmten Biegegelenk 9 aufgespannten Ebene V (Fig. 4 und 5) und stellt eine instabile Lage des Verschlussdeckels 7, 8 dar. Da in der Zwischenlage auf den Verschlussdeckel 7, 8 die höchsten Zug- und Druckspannungen wirken, versucht der Verschlussdeckel einen energetisch günstigeren Zustand einzunehmen, der entweder in der geschlossenen oder in der offenen Endlage erreicht ist, die in Fig. 4 und 5 durch die Ebenen E bzw. A angedeutet sind. Somit bilden die beiden Endlagen die einzigen stabilen Lagen des Verschlussdeckels 7, 8. Um den Verschlussdeckel 7, 8 entweder aus der einen oder aus der anderen Endlage zu bewegen, muss eine Mindestkraft aufgewendet werden, die beispielsweise beim Öffnen grösser ist, als die auf den Deckel wirkende Schliesskraft.

Die erfindungsgemässe Ausbildung des Biegegelenks ist nicht auf das geschilderte Ausführungsbeispiel einer Befestigungsvorrichtung für plattenförmige Isolationselemente beschränkt, deren Öffnung im Anpressteller mit zwei klappenartigen Verschlussdeckeln abdeckbar ist. Der erfindungsgemäss gekrümmte Verlauf des Biegegelenks kann auch bei Befestigungselementen mit nur einem Verschlussdeckel eingesetzt werden, um den Verschlussdeckel im geöffneten oder im geschlossenen Zustand ohne weitere Hilfsmittel in einer definierten und stabilen Endlage zu fixieren, die nur unter Aufbringung einer vorgebbaren Mindestkraft veränderbar ist. Die Befestigungsvorrichtung besteht wenigstens zum Teil aus Kunststoff. Insbesondere der Anpressteller mit Hohlschaft und Verschlussdeckeln ist mit den üblichen Massenfertigungsprozessen, beispielsweise in einem Spritzgiessverfahren, herstellbar. Das gekrümmte Gelenk ist vorzugsweise als Scharniergelenk ausgebildet.

## Patentansprüche

1. Befestigungsvorrichtung für plattenförmige Isolationselemente mit einem flachen Anpressteller (2) und einem davon abragenden Hohlschaft (3), der einen Hohlraum (4) umschliesst, der in einer Öffnung (6) im Anpressteller (2) mündet, welche durch wenigstens einen, über ein Biegegelenk (9) am Anpressteller (2) angelenkten, plattenartigen Verschlussdeckel (7, 8) verschliessbar ist, und mit in axialer Verlängerung des Hohlschafts (3) verlaufenden Verankerungsteilen (5), wobei der plattenartige Verschlussdeckel (7, 8) das im wesentlichen linienförmige Biegegelenk (9) aufweist, das in unmittelbarer Nachbarschaft zu der Öffnung (6) am Anpressteller (2) angeordnet ist, **dadurch gekennzeichnet, dass** das Biegegelenk räumlich derart gekrümmt ist, dass es eine Ebene (V) aufspannt, die gegenüber einer vom flachen Anpressteller (2) definierten Ebene (E) und einer parallel zur Achse des Hohlschaftes (3) verlaufenden Ebene (A) geneigt verläuft.

2. Befestigungsvorrichtung nach Anspruch 1, **dadurch gekennzeichnet, dass** die vom gekrümmten Biegegelenk (9) aufgespannte Ebene (V) gegenüber der Ebene (E) des Anpresstellers (2) um einen Winkel (α) in Richtung der achsparallelen Ebene (A) geneigt ist, der etwa 30° bis etwa 75°, vorzugsweise etwa 45° beträgt.

3. Befestigungsvorrichtung nach Anspruch 1 oder 2, **dadurch gekennzeichnet, dass** der Anpressteller (2) einen die Öffnung (6) umrandenden, vertieften Bereich (10) aufweist, der zur Aufnahme des plattenförmigen Verschlussdeckels (7, 8) ausgebildet ist und wenigstens an der dem gekrümmten Biegegelenk (9) gegenüberliegende Seite der Öffnung (6) eine Anschlagschulter (11) bildet.

4. Befestigungsvorrichtung nach Anspruch 3, **dadurch gekennzeichnet, dass** die Öffnung (6) im Anpressteller (2) entlang ihres gesamten Umfangs von einer im wesentlichen durchgehenden Anschlagschulter (11) berandet wird.

5. Befestigungsvorrichtung nach einem der vorangehenden Ansprüche, **dadurch gekennzeichnet, dass** der Verschlussdeckel (7, 8) mit Sollbiegestellen (12) versehen ist, die sich vom gekrümmten Biegegelenk (9) zum freien Ende des Verschlussdeckels (7, 8) erstrecken.

6. Befestigungsvorrichtung nach einem der vorangehenden Ansprüche, **dadurch gekennzeichnet, dass** das gekrümmte Biegegelenk (9) ein Folienscharnier ist.

7. Befestigungsvorrichtung nach einem der vorangehenden Ansprüche, **dadurch gekennzeichnet, dass** zwei plattenförmige Verschlussdeckel (7, 8) vorgesehen sind, die an einander gegenüberliegenden Bereichen beidseits der Öffnung (6) am Anpressteller (2) angelenkt sind und sich jeweils von einem gekrümmten, linienförmigen Biegegelenk (9) in Richtung des gegenüberliegenden Verschlussdeckels erstrecken.

8. Befestigungsvorrichtung nach Anspruch 7, **dadurch gekennzeichnet, dass** die Verschlussdeckel (7, 8) im zugeklappten Zustand die Öffnung (6) jeweils etwa zur Hälfte abdecken.

## Claims

1. Fastening device for plateshaped insulating elements, comprising a flat press-on plate (2) and a therefrom protruding hollow shaft (3) which encases a hollow area (4) which terminates in an opening (6) in the press-on plate (2) which is lockable via at least one plateshaped closure cover (7, 8) which is hinged via a bending hinge (9) on the press-on plate (2) and with anchoring elements (5) extending in the axial extension of the hollow shaft (3), and the plateshaped closure cover (7, 8) comprises the essentially linearly shaped bending hinge (9) which is arranged on the press-on plate (2) in the direct vicinity of the opening (6), **characterised in that** the bending hinge is spatially curved in such a manner that it clamps on a plane (V) which extends at an inclination relative a plane (E) defined by the flat press-on plate (2) and a plane (A) which extends parallel to the axis of the hollow shaft (3).

2. Mounting device according to Claim 1, **characterised in that** the plane (V) which is clamped on by the curved bending hinge (9) is inclined relative to the plane (E) of the press-on plate (2) by an angle (α) in the direction of the axis-parallel plane (A) of approximately between 30° and approximately 75°, preferably approximately 45°.

3. Mounting device according to Claim 1 or 2, **characterised in that** the press-on plate (2) comprises a deepened area (1) which surrounds the opening (6) and which is designed to accommodate the plateshaped closure cover (7, 8) and forms at least at the side of the opening (6) opposite the curved bending hinge (6) a stop shoulder (11).

4. Mounting device according to Claim 1, **characterised in that** the opening (6) in the pess-on plate (2) is along its entire circumference edged by an essentially continuous stop shoulder (11 ).

5. Mounting device according to one of the above claims, **characterised in that** the closure cover (7, 8) is provided with nominal bending points (12) which extend from the curved bending hinge (9) to the free end of the closure cover (7, 8).

6. Mounting device according to one of the above claims, **characterised in that** the curved bending hinge (9) is a foil hinge.

7. Mounting device according to one of the above claims, **characterised in that** two plateshaped closure covers (7, 8) are provided which are hinged to oppositely placed areas on both sides of the opening (6) onto the press-on plate (2) and which extend respectively from a curved linearly shaped bending hinge (9) in the direction of the opposite closure cover.

8. Mounting device according to Claim 7, **characterised in that** the closure covers (7, 8) in the closed state of the opening (6) cover respectively approximately one half.

## Revendications

1. Dispositif de fixation pour éléments isolants en forme de panneaux, avec un plateau presseur plat (2) et, dépassant de celui-ci, une tige creuse (3) qui entoure une cavité (4), laquelle débouche dans un orifice (6) du plateau presseur (2) qui peut être obturé par au moins un couvercle de fermeture en forme de plaque (7, 8) articulé sur le plateau presseur (2) par l'intermédiaire d'un joint articulé de flexion (9), et avec des parties d'ancrage (5) s'étendant dans le prolongement axial de la tige creuse (3), le couvercle de fermeture en forme de plaque (7, 8) comportant le joint articulé de flexion sensiblement linéaire (9) qui est disposé à proximité immédiate de l'orifice (6) du plateau presseur (2), **caractérisé en ce que** le joint articulé de flexion est cintré spatialement, de façon à définir un plan (V) qui s'étend de manière inclinée par rapport à un plan (E) défini par le plateau presseur plat (2) et à un plan (A) s'étendant parallèlement à l'axe de la tige creuse (3).

2. Dispositif de fixation selon la revendication 1, **caractérisé en ce que** le plan (V) défini par le joint articulé de flexion cintré (9) est incliné par rapport au plan (E) du plateau presseur (2), en direction du plan parallèle axialement (A), selon un angle (α) qui est d'environ 30° à environ 75°, de préférence d'environ 45°.

3. Dispositif de fixation selon la revendication 1 ou 2, **caractérisé en ce que** le plateau presseur (2) comporte une zone encaissée (10) qui borde l'orifice (6) et qui est conformée pour recevoir le couvercle de fermeture en forme de plaque (7, 8) et forme un épaulement de butée (11) au moins sur le côté de l'orifice (6) opposé au joint articulé de flexion cintré (9).

4. Dispositif de fixation selon la revendication 3, **caractérisé en ce que** l'orifice (6) du plateau presseur (2) est bordé sur tout son pourtour par un épaulement de butée sensiblement continu (11).

5. Dispositif de fixation selon une des revendications précédentes, **caractérisé en ce que** le couvercle de fermeture (7, 8) est pourvu d'emplacements de flexion imposée (12) qui s'étendent du joint articulé de flexion cintré (9) à l'extrémité libre du couvercle de fermeture (7, 8).

6. Dispositif de fixation selon une des revendications précédentes, **caractérisé en ce que** le joint articulé de flexion cintré (9) est une charnière-film.

7. Dispositif de fixation selon une des revendications précédentes, **caractérisé en ce qu'**il est prévu deux couvercles de fermeture en forme de plaques (7, 8) qui sont articulés sur des zones en vis-à-vis de part et d'autre de l'orifice (6) du plateau presseur (2) et qui s'étendent chacun à partir d'un joint articulé de flexion linéaire cintré (9) en direction du couvercle de fermeture opposé.

8. Dispositif de fixation selon la revendication 7, **caractérisé en ce que** les couvercles de fermeture (7, 8) en position fermée recouvrent chacun environ la moitié de l'orifice (6).
